# EUROPÄISCHE PATENTSCHRIFT

(11) **EP 1 794 484 B1**
(45) Veröffentlichungstag und Bekanntmachung des Hinweises auf die Patenterteilung: **24.02.2010**
(21) Anmeldenummer: 05796458.7
(22) Anmeldetag: 23.09.2005
(51) Int. Cl.: F16K 11/20, F16K 11/074

(54) **ABSTELL- UND UMSTELLVENTIL**
SHUT-OFF AND REVERSING VALVE
VANNE D'ISOLEMENT ET DISTRIBUTEUR D'INVERSION

(30) Priorität: 29.09.2004 DE 102004048035
(43) Veröffentlichungstag der Anmeldung: 13.06.2007
(73) Patentinhaber: Hansgrohe AG, 77761 Schiltach (DE)
(72) Erfinder: LORCH, Werner, 78713 Schramberg (DE)
(74) Vertreter: Schöndorf, Jürgen
(86) Internationale Anmeldenummer: PCT/EP2005/010298
(87) Internationale Veröffentlichungsnummer: WO 2006/034821

(56) Entgegenhaltungen:
- US-A- 2 391 126
- US-B1- 6 357 476

## Beschreibung

Die Erfindung betrifft ein Ventil, in dem Absperrmöglichkeiten und die Verteilung des Wassers auf einen von mehreren Abgängen kombiniert sind. Solche Ventile sind bekannt. Sie haben in der Regel ein einziges Betätigungselement, mit dem sowohl die Mengensteuerung als auch die Auswahl des Wasserauslasses aus dem Ventil betätigt werden kann. Da die meisten sanitären Ventile als Keramikscheibenventile ausgebildet sind, ergibt sich das Problem, dass mit zunehmender Zahl von Abgängen die Keramikscheiben größer werden. Dadurch vergrößern sich wegen der größeren Reibung die zum Betätigen des Ventils erforderlichen Kräfte. Dies gilt insbesondere dann, wenn die Absperrung und die Verteilung in dem gleichen Paar von Steuerscheiben vereinigt ist, um dadurch Bauhöhe des Ventils zu sparen.

Es ist bereits ein Ventil bekannt, mit dem sowohl eine Absperrung als auch eine Verteilung auf mehrere Auslässe durchgeführt werden kann (US 6357476). Eine Unabhängigkeit ist dabei aber nicht gegeben, da die verdrehbare Steuerscheibe der einen Steuerung mit der ebenfalls verdrehbaren Steuerscheibe der anderen Steuerung zusammen wirkt.

Bei einem weiteren Ventil (US 2391126) ist eine Steuerung mit zwei übereinander angeordneten bewegbaren Steuerscheiben vorgesehen, von denen die eine Steuerscheibe verdreht und die andere verschoben wird. Die Bewegung der Stuerscheiben ist nicht unabhänig voneinander.

Der Erfindung liegt die Aufgabe zu Grunde, ein Absperr- und Verteilerventil zu schaffen, das bei einfachem und Platz sparendem Aufbau leicht zu bedienen ist.

Zur Lösung dieser Aufgabe schlägt die Erfindung ein Ventil mit den im Anspruch 1 genannten Merkmalen vor. Weiterbildungen der Erfindung sind Gegenstand von Unteransprüchen.

Die Erfindung schlägt also vor, sowohl für die Mengensteuerung als auch für die Auswahl des Wasserauslasses aus dem Ventil eine Scheibensteuerung zu verwenden. Beide Scheibensteuerungen haben jeweils eine bewegbare Steuerscheibe, wobei nach dem Vorschlag der Erfindung diese beiden Steuerscheiben unabhängig voneinander betätigt werden könnten. Auf diese Weise verringert sich schon die Betätigungskraft, da der Benutzer die Verteilersteuerung nur dann betätigen muss, wenn er einen anderen Wasserauslass mit Wasser versorgen will. Zum Ein- und Ausschalten, das heißt zur Mengensteuerung, braucht er dagegen nur eine der beiden Steuerscheiben zu betätigen.

Da die Scheibensteuerung für die Auswahl des Wasserauslasses stromab der Mengensteuerung, also im drucklosen Bereich, angeordnet ist, sind für diese Scheibensteuerung geringere Anforderungen im Hinblick auf die Dichtigkeit gegeben. Es wird daher möglich, wie die Erfindung in Weiterbildung vorschlägt; dass die bewegbaren Steuerscheiben beider Steuerungen unabhängig voneinander anpressbar sind. Damit lässt sich die Steuerscheibe der Mengensteuerung mit für die erforderliche Dichtigkeit ausreichend hoher Kraft anpressen, ohne dass bei der Konstruktion auf die Leichtgängkeit Rücksicht genommen werden muss. Andererseits kann bei der Scheibensteuerung für die Auswahl des Wasserauslasses auf die Leichtigkeit der Bedienung geachtet werden, ohne dass man auf die Dichtigkeit besonderen Wert legen muss.

Um auch das Konstruktionsziel der geringen Bauhöhe im Auge zu behalten, kann-in Weiterbildung der Erfindung vorgesehen sein, dass die beiden bewegbaren Steuerscheiben mindestens angenähert in der gleichen Ebene angeordnet werden.

Erfindungsgemäß ist vorgesehen, dass die Steuerscheibe der Mengensteuerung zentral angeordnet ist, während die Steuerscheibe der Auswahlsteuerung außerhalb der zentralen Steuerscheibe angeordnet wird. Auch dies trägt dazu bei, dass die Betätigungskfäfte gering gehalten werden, da bei der Verdrehung der zentralen Steuerscheibe kleinere Wege zurückgelegt werden müssen.

Insbesondere kann vorgesehen sein, dass die Steuerscheibe der Auswahlsteuerung als Ring ausgebildet ist.

Durch die Maßnahmen der Erfindung ist es möglich, dass beide Steuerungen eine gemeinsame feststehende Steuerscheibe aufweisen können. Dies wird von der Erfindung ebenfalls vorgeschlagen.

Zur Betätigung in der Mengensteuerung kann erfindungsgemäß in Weiterbildung eine verdrehbare Welle mit einer durch die Mitte der Steuerscheibe verlaufenden Achse vorgesehen sein.

Zur Betätigung der umstellen Steuerung kann eine die zentrale Welle umgebende Hülse vorgesehen sein.

In nochmaliger Weiterbildung der Erfindung kann vorgesehen sein, dass der Verstellbereich der Umstellsteuerung durch mindestens einen Anschlag begrenzbar ist. Wenn ein Ventil für eine größere Zahl von möglichen Wasserauslässen vorgesehen ist, aber nur eine kleinere Zahl von Wasserauslässen vorhanden ist, kann auf diese Weise verhindert werden, dass das Umstellerelement in Positionen verstellt werden kann, die nicht vorhandenen Wasserauslässen entsprechen.

In nochmaliger Weiterbildung der Erfindung kann vorgesehen sein, dass die den Wasserauslässen zugeordneten Positionen der Umstellsteuerung gerastet ausgebildet sind. Die beiden Endpositionen der Absperrungen sind ebenfalls gerastet um eine ungewollte Mitnahme bei Betätigung der äußeren Scheibe zu vermeiden.

Besonders sinnvoll ist es, wenn die den bewegbaren Steuerscheiben zugeordnete Fläche der feststehenden Steuerscheibe in einer Ebene liegt. Eine Ausbildung derart, dass die feststehende Steuerscheibe eine Stufe aufweist, ist aber ebenfalls möglich.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: einen Axialschnitt durch ein Ventil nach der Erfindung;
- Figur 2: einen Schnitt durch das Ventil längs Linie II-II in Figur 1;
- Figur 3: einen Schnitt längs Linie III-III in Figur 1;
- Figur 4: eine Draufsicht auf das Ventil von oben in Figur 1.

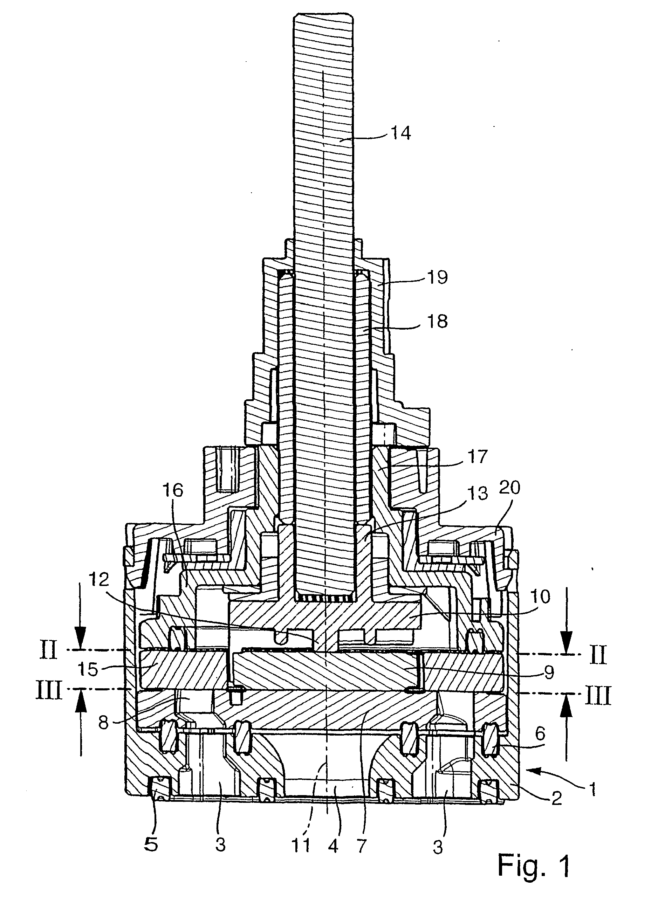

Das in Figur 1 im Axialschnitt dargestellte Sanitärventil enthält ein Ventilgehäuse 1, das in seinem unteren Bereich durch einen Boden 2 abgeschlossen ist. Der Boden 2 enthält eine Vielzahl von Auslassöffnungen 3 sowie in der Mitte eine Einlassöffnung 4. Das Ventilgehäuse 1 wird in ein Armaturengehäuse eingesetzt, in dem die entsprechenden Kanäle vorhanden sind. Zum Abdichten gegenüber dem Armaturengehäuse ist eine Dichtung 5 vorgesehen.

Auf dem Boden 2 des Ventilgehäuses 1 ruht, über Dichtungen 6 abgedichtet, eine feststehende Keramikscheibe 7, die im Sprachgebrauch auch als Verteilerscheibe bezeichnet wird. Diese Verteilerscheibe 7 hat Durchgangsöffnungen 8, die mit den Wasserauslässen 3 in Verbindung stehen. Die Verteilerscheibe 7 weist ebenfalls zwei mittlere Durchbrechungen auf, die mit dem Wassereinlass 4 in Verbindung stehen. Diese mittleren Durchbrechungen sind in dem Schnitt der Figur 1 nicht sichtbar.

Oberhalb der Verteilerscheibe 7 ist zentral eine erste bewegbarer Steuerscheibe 9 angeordnet. Diese bewegbare Steuerscheibe 9 kann mit Hilfe einer Halterung 10 um die gestrichelt angedeutete Achse 11 verdreht werden. Die Halterung 10 greift mit einem mittleren Ansatz 12 in eine im Schnitt der Figur 1 nicht sichtbare Öffnung der verdrehbaren Steuerscheibe 9 ein. Die Halterung 10 weist an ihrer Oberseite einen hülsenartigen Ansatz 13 auf, in den von der Oberseite her eine Betätigungswelle 14 eingreift. Diese Betätigungswelle 14 ragt aus dem Ventilgehäuse 1 heraus und dient zum Befestigen eines Drehknopfes oder eines Drehhebels.

Außerhalb der verdrehbaren Steuerscheibe 9 liegt auf der Steuerfläche der Verteilerscheibe 7 eine zweite bewegbare Steuerscheibe 15 auf, die als Ring ausgebildet ist und die zentrale Steuerscheibe 9 umgibt. Die als Ring ausgebildete bewegbare Steuerscheibe 15 kann mit Hilfe einer zweiten Halterung 16 verdreht werden, die mit einem oberen Ansatz 17 mit einer Hülse 18 drehfest verbunden ist. Diese Hülse 18 ist an der Betätigungswelle 14 gelagert. Auf das obere Ende der Hülse 18 ist eine äußere Drehhülse 19 drehfest aufgesetzt, die von außen her zugänglich ist und dadurch die Möglichkeit schafft, über die Hülse 18 und die Halterung 16 die zweite bewegbare Steuerscheibe 15 zu verdrehen. An der äußeren Drehhülse 19 wird ein Betätigungselement angebracht.

Mithilfe der Betätigungswelle 14 lässt sich die innere bewegbare Steuerscheibe 9 verdrehen. Mit Hilfe der äußeren Drehhülse 19 lässt sich die zweite bewegbare Steuerscheibe 15 verdrehen. Beide Betätigungen sind unabhängig voneinander.

Zur Lagerung gegenüber dem Ventilgehäuse 1 dient ein Ventilgehäusedeckel 20, der in das obere Ende des Ventilgehäuses 1 eingeschnappt ist. In der oberen Öffnung dieses Deckels 20 ist zunächst der Ansatz 17 der Halterung 16 und innerhalb dieses Ansatzes die Hülse 18 gelagert.

Dadurch ist auch die Betätigungswelle 14 gegenüber dem Ventilgehäuse 1 gelagert.

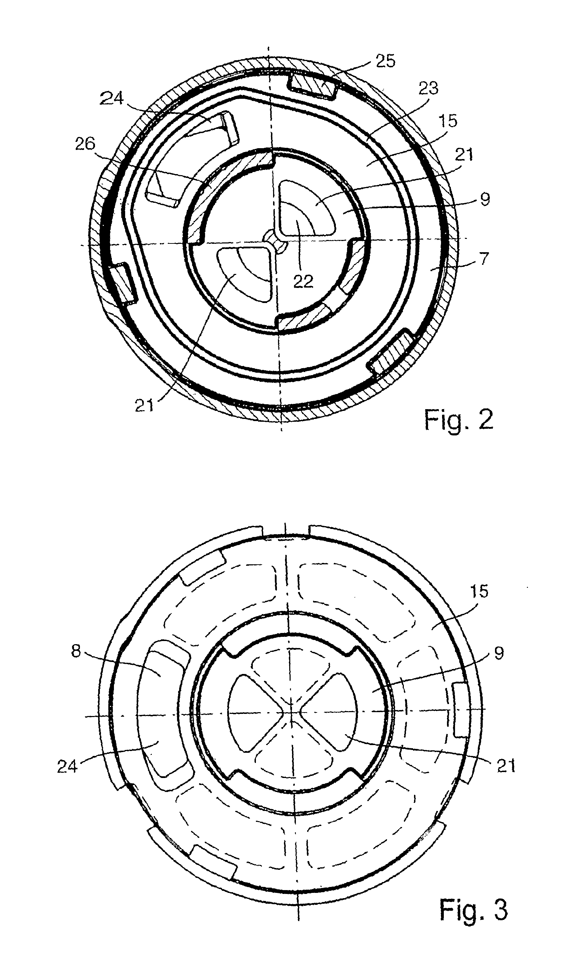

Nun zu Figur 2. Figur 2 zeigt einen Querschnitt durch die Anordnung der Figur 1 längs Linie II-II. Dadurch sind die beiden bewegbaren Steuerscheiben 9,15 in Draufsicht zu sehen. Die innere verdrehbare Steuerscheibe 9 weist zwei Durchtrittsöffnungen 21 auf, die jeweils die Form eines Kreissektors aufweisen. Durch die Durchtrittsöffnungen 21 ist die zentrale Öffnung 22 der Verteilerscheibe 7 zu sehen. Je nach Stellung der verdrehbaren Steuerscheibe 9 kann mehr oder weniger Wasser in de n Raum oberhalb der Steuerscheibe 9 fließen.

Außerhalb der zentralen bewegbaren Steuerscheibe 9 ist die als Ring ausgebildete Steuerscheibe 15 dargestellt, wobei die Form der Dichtung 23 angedeutet ist. Diese als Ring ausgebildete Steuerscheibe 15 weist eine Durchtrittsöffnung 24 auf, durch die das Wasser oberhalb der zentralen Steuerscheibe 9 durch die Durchbrechung 24 hindurch wieder nach unten und damit in einen der möglichen Wasserauslässe 3 fließen kann. Zum Verdrehen der äußeren Steuerscheibe 15 sind drei Ansätze 25 vorhandenen, die in entsprechende Ausnehmungen im Randbereich de r Steuerscheibe 15 eingreifen.

Zum Verdrehen der zentralen Steuerscheibe 9 sind ebenfalls Ansätze 26 an der zugeordneten Halterung 10 und entsprechende Ausnehmungen im Umfang der Steuerscheibe 9 vorhanden.

Figur 3 zeigt einen Schnitt längs Linie II-II in Figur 1. Hier ist die Form der Unterseite der äußeren Steuerscheibe 15 und der inneren Steuerscheibe 9 zu sehen. In der dargestellten Position liegen die Durchbrechungen 21 der Steuerscheibe 9 gegenüber den Wassereintrittsöffnungen versetzt, so dass kein Wasser durchfließt. Die Durchbrechung 24 in der äußeren Steuerscheibe 15 liegt in Verlängerung einer Öffnung 8 der Verteilerscheibe 7.

Man kann aus den Figuren 2 und 3 entnehmen, dass durch Verdrehen der äußeren Steuerscheibe 15 ausgewählt werden kann, welcher der Wasserauslässe mit Wasser versorgt wird. Es sind auch Zwischenstellungen möglich, bei denen zwei benachbarte Wasserauslässe mit Wasser versorgt werden können. Mit Hilfe der inneren Steuerscheibe 9 kann die Menge des durchfließenden Wassers eingestellt werden.

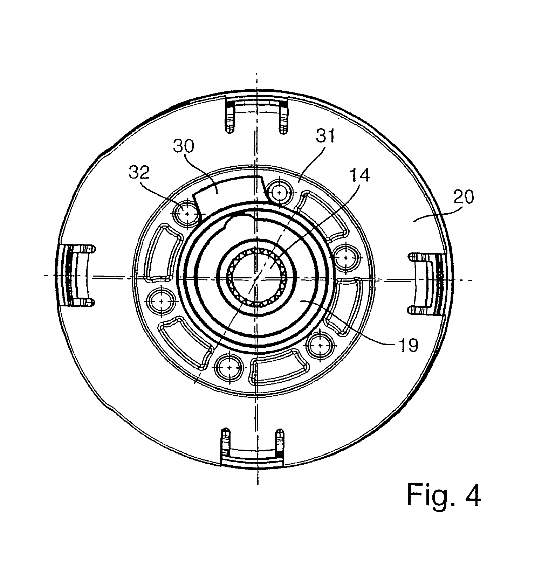

Figur 4 zeigt eine Draufsicht auf die Anordnung der Figur 1. Hier ist zu sehen, dass an der äußeren Drehhülse 19 ein Vorsprung 30 angeformt ist, der bei Verdrehung der Drehhülse 19 mit verdreht wird. In der Oberseite 31 des Gehäusedeckels 20 sind mehrere Sacklöcher 32 angebracht, in die ein Stift eingesteckt werden kann. Dadurch lässt sich der Schwenkbereich der Drehhülse 19 begrenzen. Damit soll die Möglichkeit geschaffen werden, wenn von den im dargestellten Beispiel sechs möglichen Wasserauslässen nur zwei oder drei angeschlossen sind, den Schwenkbereich auf diese Wasserauslässe zu begrenzen.

Durch die getrennte Betätigung der beiden Steuerscheiben 9 und 15 ist es möglich, mit einer geringeren Betätigungskraft auszukommen, da beispielsweise beim Verschließen eines Wasserauslasses nur die innere Steuerscheibe 9 verdreht zu werden braucht. Andererseits ist es auf diese Weise möglich, die Anpressung der äußeren Steuerscheibe 15 an die Verteilerscheibe 7 getrennt von der Anpressung der zentralen Steuerscheibe 9 einzustellen und einzurichten.

## Patentansprüche

1. Kombiniertes Absperr- und Verteilerventil, mit
1.1 einem in das Ventil führenden Wassereinlass (4),
1.2 einer als Scheibensteuerung ausgebildeten Mengensteuerung für den Wassereinlass (4),
1.3 mindestens einem Wasserauslass (8) aus dem Ventil,
1.4 einer als Scheibensteuerung ausgebildeten Auswahlsteuerung zum Auswählen eines Wasserauslasses (8), die
1.4.1 stromab der Mengensteuerung angeordnet ist, wobei
1.5 die bewegbaren Steuerscheiben (9, 15) beider Steuerungen unabhängig voneinander betätigbar und
1.6 mindestens angenähert in der gleichen Ebene angeordnet sind, und
1.7 die bewegbare Steuerscheibe (9) der Mengensteuerung zentral und die bewegbare Steuerscheibe (15) der Auswahlsteuerung diese umgebend angeordnet ist.

2. Ventil nach Anspruch 1, bei dem die bewegbaren Steuerscheiben (9, 15) beider Steuerungen unabhängig voneinander anpressbar sind.

3. Ventil nach einem der vorhergehenden Ansprüche, bei dem die Steuerscheibe (15) der Auswahlsteuerung als Ring ausgebildet ist.

4. Ventil nach einem der vorhergehenden Ansprüche, bei dem beide Steuerungen eine gemeinsame feststehende Steuerscheibe (Verteilerscheibe 7) aufweisen.

5. Ventil nach einem der vorhergehenden Ansprüche, bei der zur Betätigung der Mengensteuerung eine verdrehbare Welle (14) mit einer vorzugsweise durch die Mitte der Steuerscheibe (9) verlaufenden Achse vorgesehen ist.

6. Ventil nach Anspruch 5, bei dem zu Betätigung der Umstellsteuerung eine die Welle (14) umgebende Hülse (19) vorgesehen ist.

7. Ventil nach einem der vorhergehenden Ansprüche, bei dem der Verstellbereich der Umstellsteuerung durch mindestens einen Anschlag begrenzbar ist.

8. Ventil nach einem der vorhergehenden Ansprüche, bei dem die den Wasserauslässen (8) zugeordneten Positionen der Umstellsteuerung gerastet ausgebildet sind.

9. Ventil nach einem der vorhergehenden Ansprüche, bei dem die den bewegbaren Steuerscheiben (9, 15) zugewandte Fläche der feststehenden Steuerscheibe (Verteilerscheibe 7) in einer Ebene liegt.

## Claims

1. A combined shut-off- and distributor valve, with
1.1 a water inlet (4) leading to the valve,
1.2 a volumetric flow control formed as a disc control for water inlet (4),
1.3 at least a water outlet (8) from the valve,
1.4 a selection control formed as a disc control for the selection of a water outlet (8), which
1.4.1 is disposed downstream of the volumetric flow control, wherein
1.5 the movable control discs (9, 15) of both controls can be activated independently of one another and
1.6 are at least disposed approximately in the same plane, and
1.7 the movable control disc (9) of the volumetric flow control is disposed centrally and the movable control disc (15) of the selection control is disposed surrounding the latter.

2. The valve according to claim 1, wherein the movable control discs (9, 15) of both controls can be pressed independently of one another.

3. The valve according to one of the preceding claims, wherein the control disc (15) of the selection control is formed as a ing.

4. The valve according to one of the preceding claims, wherein both controls feature a common fixed control disc (distributor disc 7).

5. The valve according to one of the preceding claims, wherein for activating the volumetric flow control a rotatable shaft (14) with an axle preferably extending through the middle of the control disc (9) is provided.

6. The valve according to claim 5, wherein a sleeve (19) encapsulating the shaft (14) is provided for activating the switchover control.

7. The valve according to one of the preceding claims, wherein the adjustment range of the switch-over control can be limited by at least a limit stop.

8. The valve according to one of the preceding claims, wherein the positions assigned to the water outlets (8) ofthe switch-over control are notch shaped.

9. The valve according to one of the preceding claims, wherein the surface facing the movable control discs (9, 15) of the fixed control disc (distributor disc 7) lies in a plane.

## Revendications

1. Vanne combinée d'arrêt et de distribution, comprenant
1.1 un orifice d'admission (4) d'eau conduisant à l'intérieur de la vanne,
1.2 une commande de débit configurée comme commande à disque pour l'admission (4) d'eau,
1.3 au moins un orifice de sortie (8) d'eau hors de la vanne,
1.4 une commande sélective configurée comme commande à disque et servant à sélectionner un orifice de sortie (8) d'eau,
1.4.1 commande qui est agencée en aval de la commande de débit, sachant que
1.5 les disques de commande (9, 15) déplaçables des deux commandes sont actionnables indépendamment l'un de l'autre et
1.6 qu'ils sont agencés au moins approximativement sur le même plan et
1.7 que le disque de commande (9) déplaçable de la commande de débit est agencé de façon centrale, et que le disque de commande (15) déplaçable de la commande de sélection est agencé de sorte à entourer le disque premier cité.

2. Vanne selon la revendication 1, sur laquelle les disques de commande (9, 15) déplaçables des deuxcommandes peuvent être pressés en applique indépendamment l'un de l'autre.

3. Vanne selon l'une des revendications précédentes, sur laquelle le disque de commande (15) de la commande de sélection est configuré en anneau.

4. Vanne selon l'une des revendications précédentes, sur laquelle les deux commandes présentent un disque de commande (disque distributeur 7) fixe conjoint.

5. Vanne selon l'une des revendications précédentes, surlaquelle est prévu, pour actionner la commande débit, un arbre rotatif (14) avec un axe passant de préférence par le milieu du disque de commande (9).

6. Vanne selon la revendication 5, sur laquelle une douille (19) entourant l'arbre (14) est prévue pour actionner la commande d'inversion.

7. Vanne selon l'une des revendications précédentes, sur laquelle la plage de réglage de la commande d'inversion est limitable par au moins une butée.

8. Vanne selon l'une des revendications précédentes, sur laquelle les positions de la commande d'inversion affectées aux orifices de sortie (8) d'eau sont configurées crantées.

9. Vanne selon l'une des revendications précédentes, sur laquelle la surface du disque de commande fixe (disque distributeur 7) regardant les disques de commande (9, 15) déplaçables se trouve sur un plan.
